# EUROPEAN PATENT APPLICATION

(11) **EP 4 425 638 A1**
(43) Date of publication of application: **04.09.2024**
(21) Application number: 24154092.1
(22) Date of filing: 26.01.2024
(51) Int. Cl.: H01M 10/0587, H01M 10/04, H01M 10/052

(54) **METHOD OF MANUFACTURING SECONDARY BATTERY**

(30) Priority: 03.03.2023 JP 2023032920
(71) Applicant: Prime Planet Energy & Solutions, Inc., Chuo-ku Tokyo 103-0022 (JP)
(72) Inventor: MATSUI, Yu, Tokyo, 103-0022 (JP); HAYA, Junichi, Tokyo, 103-0022 (JP)
(74) Representative: Kuhnen & Wacker Patent- und Rechtsanwaltsbüro PartG mbB

(57) **Abstract**

A method of manufacturing a secondary battery (100) disclosed herein includes: a step (S2) of winding a first separator (32) and a second separator (34) onto a winding core (210); a step (S3) of arranging a winding-start end (20s) of the negative electrode (20) such that the negative electrode (20) is located on an inner circumferential side of the first separator (32) and also arranging a winding-start end (10s) of the positive electrode (10) between an outer circumferential side surface of the first separator (32) and the second separator (34), in a state where the winding core (210) is stopped; and a step (S4) of winding the positive electrode (10) and the negative electrode (20) onto the winding core (210).

## Description

### BACKGROUND OF THE DISCLOSURE

### 1. Field

The present invention relates to a method of manufacturing a secondary battery. 2. Background

Conventionally, there is a known secondary battery that includes a wound electrode body in which a first separator with a band shape, a positive electrode with a band shape, a second separator with a band shape, and a negative electrode with a band shape are stacked and wound around a winding axis (see, for example, Japanese Patent Application JP 2022-127948 A).

### SUMMARY

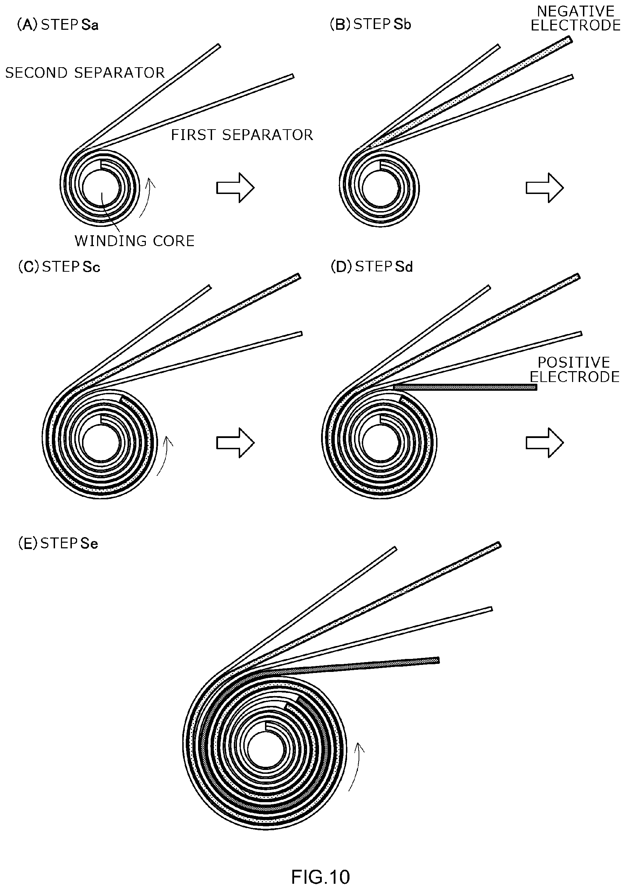

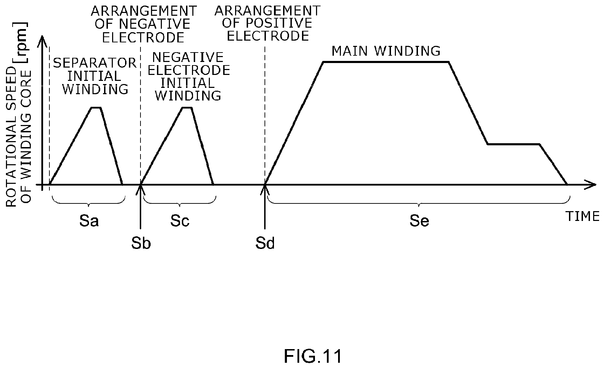

A wound electrode body is produced, for example, by the following steps. That is, first, a winding device with a winding core is prepared as illustrated in FIG. 10 (A). Then, a positive electrode with a band shape, a negative electrode with a band shape, and two separators with a band shape are reeled and set on the winding device. The winding core has, for example, an adsorption mechanism and is configured to be able to fix (e.g., adsorb and fix) the separators supported by the winding core. The winding core also has a rotation mechanism and is configured to be rotatable at a predetermined rotational speed in a predetermined rotational direction (here, counterclockwise, in the direction indicated by the arrow in FIG. 10 (A)). FIG. 11 schematically illustrates the rotational speed of a winding core 210 in each step.

Next, as illustrated in FIG. 10 (A), the starting end parts of the two separators with a band shape are each adsorbed and fixed to the winding core (retaining step). Then, as illustrated in FIG. 10 (A) and FIG. 11, the winding core is rotated in this state, causing the two separators to be wound onto the winding core by a predetermined length (step Sa; separator initial winding step). Next, as illustrated in FIG. 10 (B), the rotation of the winding core 210 is temporarily stopped, and the starting end part of a negative electrode with a band shape is arranged between the two separators (step Sb; negative electrode arrangement step). Then, as illustrated in FIG. 10 (C) and FIG. 11, the winding core is rotated in this state, causing the two separators and the negative electrode with a band shape to be wound onto the winding core by a predetermined length (step Sc; separator initial winding step). Next, as illustrated in FIG. 10 (D), the rotation of the winding core 210 is temporarily stopped again, and the starting end part of a positive electrode with a band shape is arranged between the two separators (step Sd; positive electrode arrangement step). Then, as illustrated in FIG. 10 (E) and FIG. 11, the winding core is rotated while feeding the positive electrode with a band shape and the negative electrode with a band shape such that the positive electrode is wrapped in the negative electrode, thereby winding the positive electrode, negative electrode, and separators onto the winding core (step Se; main winding step). As described above, a cylindrical wound body (cylindrical body) is formed.

In such a conventional method, as illustrated in FIG. 11, the rotation of the winding core 210 is stopped twice in total, specifically, when the negative electrode is arranged (step Sb) and when the positive electrode is arranged (step Sd), thereby preventing, for example, strong rubbing between the separator and the surface of the electrode (negative electrode and/or positive electrode) as well as stacking displacement (misalignment) of the electrodes. However, this method has been problematic because it lengthens the tact time for winding the cylindrical body, which in turn degrades the productivity of a secondary battery.

The present invention has been made in view of the above circumference and has an obj ect to provide a method of manufacturing a secondary battery with improved productivity.

The present invention provides a method of manufacturing a secondary battery that includes a wound electrode body in which a first separator with a band shape, a positive electrode with a band shape, a second separator with a band shape, and a negative electrode with a band shape are stacked and wound. This manufacturing method includes: a retaining step of retaining the first separator and the second separator on a winding core; a first winding step of, after the retaining step, rotating the winding core at a first rotational speed to wind the first separator and the second separator onto the winding core; an arrangement step of, after the first winding step, arranging a winding-start end of the negative electrode such that the negative electrode is located on an inner circumferential side of the first separator and also arranging a winding-start end of the positive electrode between an outer circumferential side surface of the first separator and the second separator, in a state where the winding core is rotated at a second rotational speed slower than the first rotational speed or is stopped; and a second winding step of, after the arrangement step, winding the positive electrode and the negative electrode onto the winding core at a third rotational speed faster than the first rotational speed.

In the manufacturing method disclosed herein, in the arrangement step, the negative electrode is arranged on the inner circumferential side of the first separator, and the positive electrode is arranged between the outer circumferential side surface of the first separator and the second separator, whereby the negative electrode is wrapped in the positive electrode. This makes it possible to wind the positive electrode and the negative electrode onto the winding core substantially at the same time. As a result, the number of times that the rotation of the winding core is slowed or stopped can be decreased from two times to one time. Therefore, according to the art disclosed herein, the tact time for winding can be shortened, thereby efficiently producing a wound electrode body with high reliability where stacking displacement or the like is suppressed. This can in turn improve the productivity of a secondary battery.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a perspective diagram schematically illustrating a secondary battery according to an embodiment;
FIG. 2 is a schematic longitudinal-sectional diagram taken along line II-II in FIG. 1;
FIG. 3 is a schematic longitudinal-sectional diagram taken along line III-III in FIG. 1;
FIG. 4 is a schematic cross-sectional diagram taken along line IV-IV in FIG. 1;
FIG. 5 is a perspective diagram schematically illustrating a plurality of wound electrode bodies attached to a sealing plate;
FIG. 6 is a schematic sectional view of the wound electrode body;
FIG. 7 is a schematic diagram illustrating a configuration of the wound electrode body.
FIG. 8 shows in illustrations (A) to (D) explanatory diagrams of a winding step according to an embodiment in which (A) is an explanatory diagram of a retaining step, (B) is an explanatory diagram of a first winding process, (C) is an explanatory diagram of an arrangement step, and (D) is an explanatory diagram of a second winding step;
FIG. 9 is a graph schematically illustrating the rotational speed of a winding core according to an embodiment;
FIG. 10 shows in illustrations (A) to (E) explanatory diagrams of a winding step of the related art, in which (A) illustrates a separator initial winding step, (B) illustrates a negative electrode arrangement step, (C) illustrates a negative electrode initial winding step, (D) illustrates a positive electrode arrangement step, and (E) illustrates a main winding step; and
FIG. 11 is a schematic graph illustrating the rotational speed of a winding core of the related art.

### DETAILED DESCRIPTION OF THE PREFERRED EMBODIMENTS

Preferred embodiments of the art disclosed herein will be described next with reference to accompanying drawings. Incidentally, matters other than matters particularly mentioned in the present specification, and necessary for the implementation of the art disclosed herein (for example, the general configuration and manufacturing process of a secondary battery that do not characterize the present disclosure) can be grasped as design matters of those skilled in the art based on the conventional art in the relevant field. The art disclosed herein can be implemented on the basis of the disclosure of the present specification and common technical knowledge in the relevant field. In the present specification, the notation "A to B" for a range signifies a value "equal to or more than A and equal to or less than B" and is meant to encompass also the meaning of being "larger than A" and "smaller than B".

In the present specification, the term "secondary battery" denotes a power storage device in general that can be repeatedly charged and discharged as a result of the movement of charge carriers across a positive electrode and a negative electrode via an electrolyte. The concept of the secondary battery encompasses storage batteries such as lithium-ion secondary batteries and nickel-metal hydride batteries, and capacitors such as lithium-ion capacitors and electrical double layer capacitors. Embodiments of a lithium-ion secondary battery will be described next.

### < 1. Structure of secondary battery>

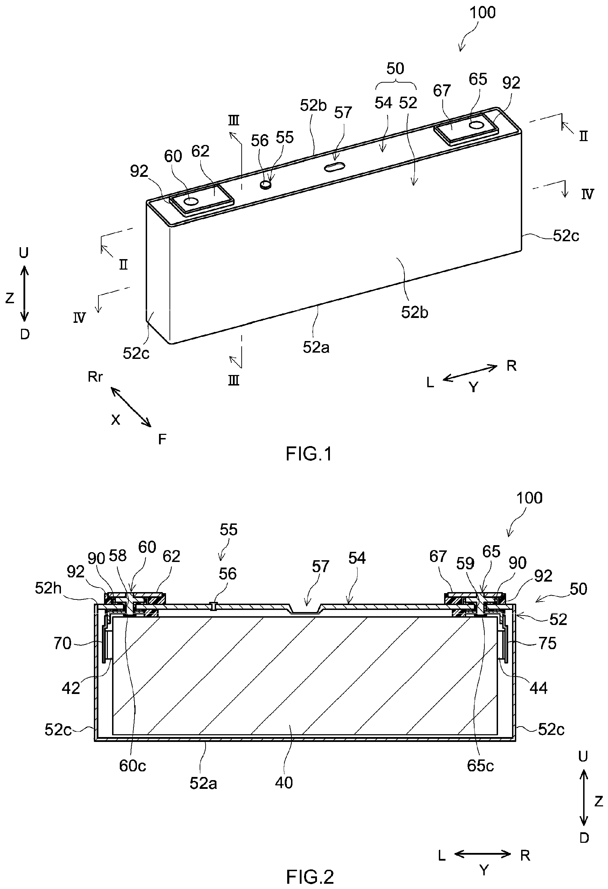

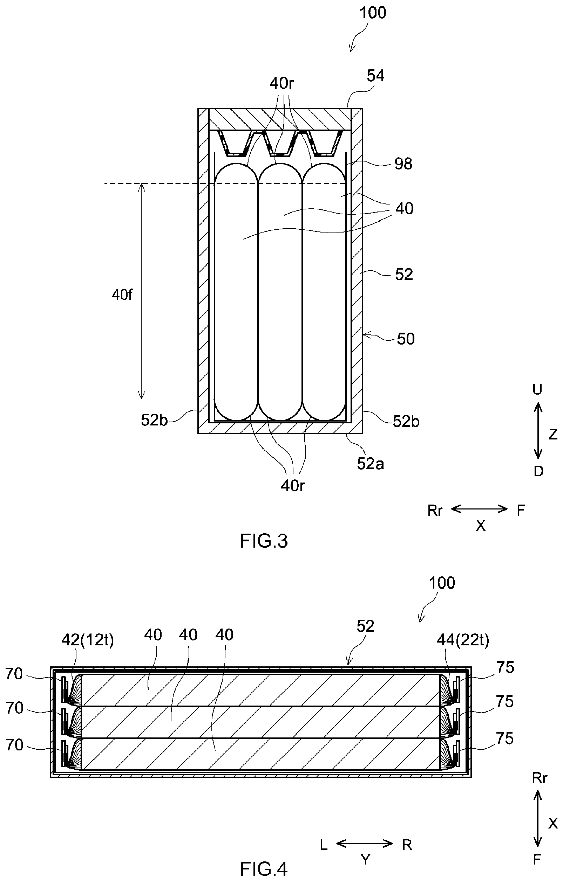

First, a secondary battery 100 manufactured by the manufacturing method disclosed herein will be described. FIG. 1 is a perspective diagram of the secondary battery 100 according to the present embodiment. FIG. 2 is a schematic longitudinal-sectional diagram taken along line II-II in FIG. 1. FIG. 3 is a schematic longitudinal-sectional diagram taken along line III-III in FIG. 1. FIG. 4 is a schematic cross-sectional diagram taken along line IV-IV in FIG. 1. In the following description, the reference sign X denotes a "depth direction", the reference sign Y denotes a "width direction" perpendicular to the depth direction, and the reference sign Z denotes a "height direction" perpendicular to the depth direction and the width direction. Further, the reference sign F in the depth direction X denotes "front", and Rr denotes "rear". The reference sign L in the width direction Y denotes "left", and the reference sign R denotes "right". The reference sign U in the height direction Z denotes "up", and D denotes "down". These directions are defined however for convenience of explanation and are not intended to limit the manner in which the secondary battery 100 disclosed herein is installed.

As illustrated in FIG. 2, the secondary battery 100 includes a wound electrode body 40, a battery case 50 that accommodates the wound electrode body 40, a positive electrode terminal 60, and a negative electrode terminal 65. Although the illustration is omitted, the secondary battery 100 further includes an electrolyte solution. The secondary battery 100 is preferably a nonaqueous electrolyte secondary battery, such as a lithium-ion secondary battery. The secondary battery 100 is characterized by including the wound electrode body 40 disclosed herein, and the other structures may be similar to those in the related art.

The battery case 50 is a housing that accommodates the wound electrode body 40 and the electrolyte solution. As illustrated in FIG. 1, the external shape of the battery case 50 here is a flat and bottomed cuboid shape (rectangular shape). A conventionally known material can be used in the battery case 50 without particular limitations. The battery case 50 is desirably made of metal. Examples of the material of the battery case 50 include aluminum, aluminum alloys, iron, iron alloys, and the like. As illustrated in FIG. 1 and FIG. 2, the battery case 50 includes an exterior body 52 and a sealing plate 54. The battery case 50 is preferably a rectangular battery including the exterior body 52 and the sealing plate 54.

As illustrated in FIG. 2, the exterior body 52 is a flat and bottomed rectangular container having an opening 52h in the top face. As illustrated in FIG. 1, the exterior body 52 has a bottom wall 52a with a substantially rectangular shape in a plan view, a pair of long side walls 52b extending upward in the height direction Z from the long sides of the bottom wall 52a and opposing each other, and a pair of short side walls 52c extending upward in the height direction Z from the short sides of the bottom wall 52a and opposing each other. The bottom wall 52a opposes the opening 52h. The short side wall 52c is smaller in area than the long side wall 52b.

As illustrated in FIG. 2, the sealing plate 54 is a plate-shaped member that plugs the opening 52h of the exterior body 52. The sealing plate 54 has a substantially rectangular shape in the plan view. A peripheral edge of the sealing plate 54 is joined (for example, joined by welding) to the opening 52h of the exterior body 52. Accordingly, the battery case 50 is hermetically sealed (closed). The sealing plate 54 is provided with a liquid injection hole 55, a gas discharge valve 57, and two terminal insertion holes 58, 59. The liquid injection hole 55 is a through-hole for the purpose of injecting the electrolyte solution into the battery case 50 after the sealing plate 54 is assembled to the exterior body 52. The liquid injection hole 55 is sealed with a sealing member 56 after injection of the electrolyte solution. The gas discharge valve 57 is a thin-walled portion designed to break (to open) when the pressure in the battery case 50 becomes more than or equal to a predetermined value so as to discharge the gas to the outside.

The electrolyte solution may be similar to that in the related art and is not particularly limited. The electrolyte solution is, for example, a nonaqueous electrolyte solution containing a nonaqueous solvent (organic solvent) and a supporting salt (electrolyte salt). The electrolyte solution is preferably the nonaqueous electrolyte solution. Examples of the nonaqueous solvent include carbonates such as ethylene carbonate, dimethyl carbonate, and ethyl methyl carbonate. Examples of the supporting salt include fluorine-containing lithium salts such as lithium hexafluorophosphate (LiPF₆). The electrolyte solution may contain an additive as necessary.

The positive electrode terminal 60 is attached to one end part (left end part in FIG. 1 and FIG. 2) of the sealing plate 54 in the width direction Y The negative electrode terminal 65 is attached to the other end part (right end part in FIG. 1 and FIG. 2) of the sealing plate 54 in the width direction Y As illustrated in FIG. 2, the positive electrode terminal 60 and the negative electrode terminal 65 extend from the inside to the outside of the sealing plate 54 through the terminal insertion holes 58 and 59, respectively. Agasket 90 made of resin is fitted to each of the terminal insertion holes 58, 59 of the sealing plate 54. As a result, the positive electrode terminal 60 and the negative electrode terminal 65 which are inserted into the terminal insertion holes 58, 59, respectively, are insulated from the sealing plate 54.

As illustrated in FIG. 1 and FIG. 2, the positive electrode terminal 60 is connected to a positive electrode external conductive member 62 with a plate shape, on an outer surface of the sealing plate 54. The negative electrode terminal 65 is connected to a negative electrode external conductive member 67 with a plate shape. Each of the positive electrode external conductive member 62 and the negative electrode external conductive member 67 is insulated from the sealing plate 54 by an external insulating member 92 made of resin. The positive electrode external conductive member 62 and negative electrode external conductive member 67 are connected to another battery or an external device via an external connecting member (bus bar or the like).

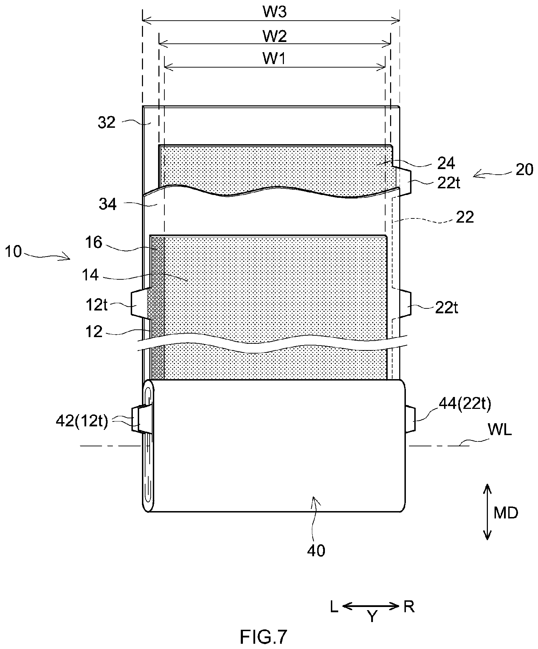

As illustrated in FIG. 2, a lower end part 60c of the positive electrode terminal 60 is connected to a positive electrode current collection member 70 inside the exterior body 52. The positive electrode terminal 60 is connected to a positive electrode 10 of the wound electrode body 40 (see FIG. 7) through the positive electrode current collection member 70. A lower end part 65c of the negative electrode terminal 65 is connected to a negative electrode current collection member 75 inside the exterior body 52. The negative electrode terminal 65 is connected to a negative electrode 20 of the wound electrode body 40 (see FIG. 7) through the negative electrode current collection member 75.

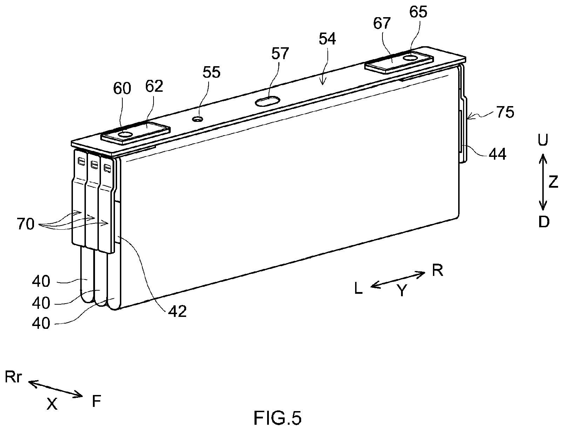

FIG. 5 is a perspective diagram schematically illustrating a plurality of the wound electrode bodies 40 attached to the sealing plate 54. In the secondary battery 100 of the present embodiment, the plurality (more specifically, three) of wound electrode bodies 40 are accommodated in one battery case 50 while being arranged in the depth direction X, as illustrated in FIG. 3 to FIG. 5. In a case where the secondary battery 100 has a plurality of wound electrode bodies 40, the tact time of the wound electrode bodies 40 is lengthened, which significantly affects the production of the secondary battery 100. Therefore, it is particularly effective to apply the art disclosed herein. However, the number of wound electrode bodies 40 arranged in one battery case 50 is not particularly limited, and the arranged wound electrode bodies 40 may be two or more (plural), or just one. The wound electrode bodies 40 are accommodated inside the exterior body 52, while being covered here by an electrode body retainer 98 (see FIG. 3) made of an insulating resin sheet. This prevents direct contact between the wound electrode body 40 and the exterior body 52.

As illustrated in FIG. 3, the wound electrode body 40 has a flat external shape. The wound electrode body 40 preferably has a flat external shape as in the present embodiment. The wound electrode body 40 with a flat shape has a pair of curved portions (R portions) 40r having curved outer surfaces, and a flat portion 40f having a flat outer surface and connecting the pair of curved portions 40r. As can be seen from FIG. 2, FIG. 5, and FIG. 7, each of the plurality of wound electrode bodies 40 is arranged inside the battery case 50 in a direction in which a winding axis WL (see FIG. 7) is parallel to the width direction Y of the secondary battery 100. The pair of curved portions 40r opposes the bottom wall 52a of the exterior body 52 and the sealing plate 54. The pair of flat portions 40f opposes the pair of long side walls 52b of the exterior body 52.

As illustrated in FIG. 2 and FIG. 4, a positive electrode tab group 42 is provided on one end part (left end part) of the wound electrode body 40 in the width direction Y, and a negative electrode tab group 44 is provided on the other end part (right end part). The positive electrode current collection member 70 is attached to the positive electrode tab group 42. The positive electrode tab group 42 is connected to the positive electrode terminal 60 through the positive electrode current collection member 70. The negative electrode current collection member 75 is attached to the negative electrode tab group 44. The negative electrode tab group 44 is connected to the negative electrode terminal 65 through the negative electrode current collection member 75. The secondary battery 100 has a so-called lateral tab structure in which the positive electrode tab group 42 and the negative electrode tab group 44 are located on a left side and a right side of the wound electrode body 40, respectively. However, in other embodiments, the secondary battery 100 may have a so-called upper tab structure in which the positive electrode tab group 42 and the negative electrode tab group 44 are located on an upper side and a lower side of the wound electrode body 40, respectively.

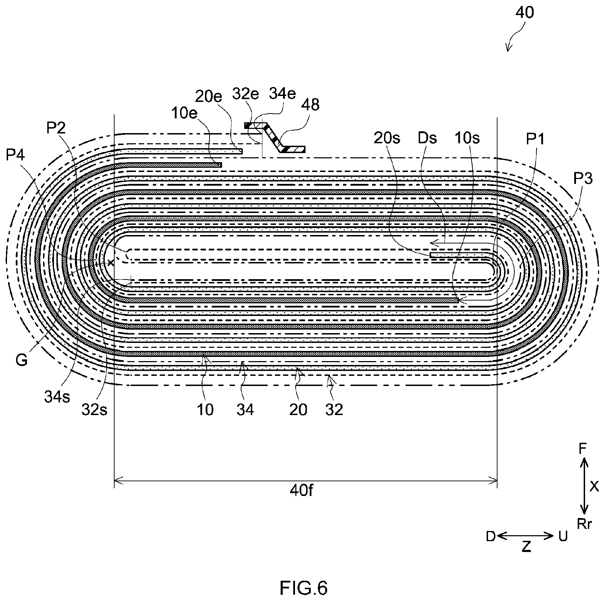

FIG. 6 is a schematic sectional diagram illustrating a cross section orthogonal to the winding axis direction of the wound electrode body 40. FIG. 7 is a schematic diagram illustrating the structure of the wound electrode body 40. The reference sign X in FIG. 6 is also the thickness direction of the wound electrode body 40. The reference sign MD in FIG. 7 signifies a longitudinal direction (i.e., winding direction) of the wound electrode body 40 and separators 32 and 34, and denotes herein a "machine direction".

As illustrated in FIG. 7, the wound electrode body 40 is configured by stacking and winding the first separator 32 with a band shape, the positive electrode 10 with a band shape, the second separator 34 with a band shape, and the negative electrode 20 with a band shape on each other. Such a wound electrode body 40 can be formed, for example, by winding the positive electrode 10 with a band shape, the negative electrode 20 with a band shape, and the two separators 32 and 34 with a band shape in the longitudinal direction MD around the winding axis WL, as described in the manufacturing method described below.

As illustrated in FIG. 6, in a winding-start end region (wound center region) of the wound electrode body 40, the separators 32 and 34 are wound prior to the winding of the positive electrode 10 or the negative electrode 20. That is, the starting end part (the vicinity of the winding axis WL) of the wound electrode body 40 is composed of the separators 32 and 34. Neither the positive electrode 10 nor the negative electrode 20 is located at the starting end part of the wound electrode body 40. A winding-start end 32s of the first separator 32 and a winding-start end 34s of the second separator 34 are here located in the flat portion 40f. The winding-start end 32s of the first separator 32 and the winding-start end 34s of the second separator 34 are preferably aligned with each other.

In the following description, the first bending point from each of the winding-start end 32s and 34s of the separators 32 and 34 is referred to as a first bending point P1, the second bending point as a second bending point P2, the third bending point as a third bending point P3, and the fourth bending point as a fourth bending point P4. The first bending point P1 and the third bending point P3 are located on one side in the height direction Z (top side in FIG. 6) and are stacked (overlapped). The second bending point P2 and the fourth bending point P4 are located on the other side in the height direction Z (lower side in FIG. 6) and are stacked (overlapped).

The separators 32 and 34 are each folded back at the first bending point P1 and then folded back on the opposite side at the second bending point P2 to form a folded pleat shape. In the winding-start end region, the separators 32 and 34 each have a Z-shape. Thus, in the first winding step (step S2) of the manufacturing method described below, the separators 32 and 34 can be tensioned appropriately even when the initial winding length of each of the separators 32 and 34 is relatively short, thereby reducing costs. In addition, in the arrangement step (step S3) of the manufacturing method described below, a winding method which involves wrapping the negative electrode 20 in the positive electrode 10 can be suitably employed. Furthermore, a void G can be secured in the vicinity of the second bending point P2, which can improve the impregnation of the electrolyte solution in the center region of the wound electrode body 40 (particularly, at the center in the width direction Y). The battery characteristics (e.g., high-rate cycle characteristics) can in turn be improved.

A winding-start end 20s of the negative electrode 20 is located on the winding-start end side relative to a winding-start end 10s of the positive electrode 10. The winding-start end 20s of the negative electrode 20 is here located in the flat portion 40f between the first bending point P1 and the second bending point P2. The winding-start end 20s of the negative electrode 20 is located closer to the first bending point P1 than the second bending point P2. The winding-start end 20s of the negative electrode 20 is wrapped by the first separator 32 on the winding-start end side relative to the second bending point P2. In detail, it is sandwiched between the outer circumferential surface of the first separator 32 folded back at the first bending point P1 and the inner circumferential surface of the first separator 32 folded back at the second bending point P2. Because the separators 32 and 34 have a Z-shape, the negative electrode 20 is sandwiched between the inner circumferential surface of the first separator 32 and the outer circumferential surface of the second separator 34 from beyond the fourth bending point P4.

The winding-start end 10s of the positive electrode 10 is located on the winding-termination end side (position advanced in the winding direction) relative to the winding-start end 20s of the negative electrode 20. The winding-start end 10s of the positive electrode 10 is here located at the flat portion 40f between the third bending point P3 and the fourth bending point P4. The winding-start end 10s of the positive electrode 10 is located closer to the first bending point P1 (and the third bending point P3) than the second bending point P2. The winding-start end 10s of the positive electrode 10 is sandwiched between the outer circumferential surface of the first separator 32 and the inner circumferential surface of the second separator 34, where these separators are folded back at the third bending point P3 on the winding-termination end side relative to the third bending point P3. The second separator 34 is wound on the outer circumferential side of the positive electrode 10. The negative electrode 20 is wound on the outer circumferential side of the second separator 34.

In the thickness direction of the wound electrode body 40 (direction X in FIG. 6), the starting end part of the negative electrode 20 preferably overlaps the starting end part of the positive electrode 10 in the region on the winding-start end side relative to the first bending point (here, the third bending point P3). In this way, the starting end part of the positive electrode 10 and the winding-start end 20s of the negative electrode 20 overlap each other at the boundary between the flat portion 40f and the curved portion 40r, where a difference in surface pressure tends to occur, which can prevent formation of a large step (recess) in the flat portion 40f. Thus, even when pressure is applied to the flat portion 40f during the manufacturing process or during the use of the secondary battery 100, a difference in surface pressure is less likely to occur. Therefore, uneven current distribution hardly occurs, so that an uneven charging/discharging reaction can be suppressed. As a result, the occurrence of Li deposition can be suppressed. Micro-short circuit between the positive electrode 10 and the negative electrode 20 can in turn be prevented.

A spacing Ds between the winding-start end 10s of the positive electrode 10 and the winding-start end 20s of the negative electrode 20 is preferably 20 mm or less in the winding direction (longitudinal direction MD). This can prevent, for example, the formation of any large step (recess) in the flat portion 40f, and for the reason described above, this can also prevent the occurrence of Li deposition. Micro-short circuit between the positive electrode 10 and the negative electrode 20 can in turn be prevented. The spacing Ds is generally preferably 10 mm or more, and more preferably 13 mm or more from the viewpoint of acceptability of charge carriers. The spacing Ds is more preferably 17 mm or less from the viewpoint of improving resistance to Li deposition.

A winding-termination end 10e of the positive electrode 10 is located on the winding-start end side relative to a winding-termination end 20e of the negative electrode 20. The winding-termination end 10e of the positive electrode 10 is here located at the flat portion 40f. The winding-termination end 20e of the negative electrode 20 is located on the winding-termination end side (position advanced in the winding direction) relative to the winding-termination end 10e of the positive electrode 10. The winding-termination end 20e of the negative electrode 20 is here located at the flat portion 40f. The winding-termination end 20e of the negative electrode 20 is covered from the outer circumferential side by two separators 32 and 34.

In the wound electrode body 40, it is preferable that the negative electrode 20 is always located preferably on the surface facing the positive electrode 10 from the viewpoint of acceptability of the charge carriers. In other words, preferably, the winding-start end 20s of the negative electrode 20 is located on the winding-start end side relative to the winding-start end 10s of the positive electrode 10, and the winding-termination end 20e of the negative electrode 20 is located on the winding-termination end side relative to the winding-termination end 10e of the positive electrode 10. This can prevent Li drawn from a part of the positive electrode not facing the negative electrode from being concentrated on a part of the positive electrode facing the negative electrode. Thus, the occurrence of Li deposition can be suppressed. Micro-short circuit between the positive electrode 10 and the negative electrode 20 can in turn be prevented.

A winding-termination end 32e of the first separator 32 and a winding-termination end 34e of the second separator 34 are located on the winding-termination end side (position advanced in the winding direction) relative to the winding-termination end 10e of the positive electrode 10 and the winding-termination end 20e of the negative electrode 20. The winding-termination end 32e of the first separator 32 and the winding-termination end 34e of the second separator 34 here are located in the flat portion 40f. The winding-termination end (outermost circumferential part) of the second separator 34 forms an outer circumferential surface of the wound electrode body 40. A winding stopper tape 48 is attached to the winding-termination end 32e of the first separator 32 and the winding-termination end 34e of the second separator 34 so as to prevent loosening of the winding.

The winding-termination end 32e of the first separator 32 and the winding-termination end 34e of the second separator 34 are preferably aligned with each other. This can reduce the width of the winding stopper tape 48, thereby preventing twisting when pulling it out and wrinkling when attaching it. As a result, for example, it is possible to suppress the occurrence of a portion with a locally large thickness (convex portion) in the flat portion 40f, and for the reason described above, the occurrence of Li deposition can be suppressed. Micro-short circuit between the positive electrode 10 and the negative electrode 20 can in turn be prevented. In addition, the amount of use of the winding stopper tape 48, which is expensive, can be reduced, leading to reduction in cost.

Preferably, the number of winding turns of the wound electrode body 40 is adjusted as appropriate taking into consideration, for example, the intended performance of the secondary battery 100 and manufacturing efficiency. The number of winding turns is preferably 20 or more, and more preferably 25 or more. The more the number of winding turns, the more significantly the tact time of the wound electrode body 40 affects the productivity of the secondary battery 100. Therefore, it is particularly effective to apply the art disclosed herein. A concrete structure of the wound electrode body 40 will be described below.

The positive electrode 10 may be similar to that in the related art and is not particularly limited. The positive electrode 10 is a band-shaped member, as illustrated in FIG. 7. The positive electrode 10 includes a positive electrode core body 12 with a band shape, and a positive electrode active material layer 14 and a protective layer 16 that are affixed to at least one surface of the positive electrode core body 12. The positive electrode 10 preferably includes the positive electrode core body 12 and the positive electrode active material layer 14. The positive electrode active material layer 14 is preferably formed on both surfaces of the positive electrode core body 12, from the viewpoint of higher capacity. The protective layer 16 is not essential and can be omitted in another embodiment. A metal foil having predetermined conductivity can be preferably used in the positive electrode core body 12. Preferably, the positive electrode core body 12 is, for example, made of aluminum or an aluminum alloy.

In the positive electrode 10, positive electrode tabs 12t protrude outward (toward the left in FIG. 7) from one edge in the width direction TD. The plurality of positive electrode tabs 12t are provided at predetermined intervals in the longitudinal direction MD. The positive electrode tabs 12t are portions (current collector exposing portion) at which the positive electrode active material layer 14 is not formed and the positive electrode core body 12 is exposed. As illustrated in FIG. 4 and FIG. 7, the plurality of positive electrode tabs 12t are stacked at one end part of the secondary battery 100 in the long side direction Y (left end part in FIG. 4 and FIG. 7) and form the positive electrode tab group 42.

As illustrated in FIG. 7, the positive electrode active material layer 14 is provided to have a band shape in the longitudinal direction MD of the positive electrode core body 12. The positive electrode active material layer 14 here is formed on both surfaces of the positive electrode core body 12 from the winding-start end 10s to the winding-termination end 10e of the positive electrode 10 illustrated in FIG. 6. The positive electrode active material layer 14 contains a positive electrode active material that is capable of reversibly storing and releasing charge carriers. The positive electrode active material layer 14 preferably contains the positive electrode active material, a binder, and a conductive material. A width W1 (see FIG. 7) of the positive electrode active material layer 14 is generally 100 to 400 mm, and may be, for example, 200 to 350 mm.

The positive electrode active material is a particulate material that can reversibly store and release charge carriers. The positive electrode active material preferably contains a lithium-transition metal complex oxide. A preferred example of the lithium-transition metal complex oxide is a lithium-transition metal complex oxide represented by general formula LiMO₂ (in which M is one, or two or more types of transition metal element other than Li). Specifically, the above M element is preferably a lithium-transition metal complex oxide containing at least one from Ni, Co and Mn, and particularly preferably is a lithium-transition metal complex oxide containing Ni.

As a positive electrode binder, resin binders conventionally used as a positive electrode binder can be used. Examples thereof include polyvinyl halide resins such as polyvinylidene fluoride (PVdF) and polyalkylene oxides such as polyethylene oxide (PEO). The positive electrode binder may be composed of PVdF. In addition to the positive electrode active material and the positive electrode binder, the positive electrode active material layer 14 may contain arbitrary components such as, for example, a conductive material and a dispersant. Examples of conductive materials include carbon black such as acetylene black (AB) or Ketjenblack, and carbon materials such as activated carbon, graphite, and carbon fiber.

The protective layer 16 is a layer configured to have lower electrical conductivity than that of the positive electrode active material layer 14. The protective layer 16 is provided in a region adjacent to an edge of the positive electrode 10 on the positive electrode tab 12t side. The protective layer 16 is formed in a band shape along the longitudinal direction MD of the positive electrode 10. By providing the protective layer 16, it becomes possible to prevent internal short circuits caused by direct contact between the positive electrode core body 12 and a negative electrode active material layer 24 when the separators 32 and 34 are damaged. Preferably, the protective layer 16 contains insulating ceramic particles such as alumina. The protective layer 16 may contain a binder for fixing the ceramic particles on the surface of the positive electrode core body 12. However, the protective layer is not an essential component and can be omitted in other embodiments.

The negative electrode 20 may be the same as the conventional one and is not particularly limited. The negative electrode 20 is a band-shaped member, as illustrated in FIG. 7. The negative electrode 20 includes a negative electrode core body 22 with a band shape and the negative electrode active material layer 24 that is affixed to at least one surface of the negative electrode core body 22. The negative electrode 20 preferably includes the negative electrode core body 22 and the negative electrode active material layer 24. The negative electrode active material layer 24 is preferably formed on both surfaces of the negative electrode core body 22 from the viewpoint of higher capacity. Conventionally known materials that can be used in secondary batteries in general (for example, in lithium-ion secondary batteries) can be utilized, without particular restrictions, in the respective members that form the negative electrode 20. For example, a metal foil having predetermined conductivity can be preferably used in the negative electrode core body 22. Preferably, the negative electrode core body 22 is, for example, made of copper or a copper alloy.

In the negative electrode 20, negative electrode tabs 22t protrude outward (toward the right in FIG. 7) from one edge in the width direction TD. The negative electrode tabs 22t are provided at predetermined intervals in the longitudinal direction MD. The negative electrode tabs 22t are portions (current collector exposing portion) at which the negative electrode active material layer 24 is not formed and the negative electrode core body 22 is exposed. As illustrated in FIG. 4 and FIG. 7, the plurality of negative electrode tabs 22t are stacked at one end part of the secondary battery 100 in the long side direction Y (right end part in FIG. 4 and FIG. 7) and form the negative electrode tab group 44.

As illustrated in FIG. 7, the negative electrode active material layer 24 is provided to have a band shape in the longitudinal direction MD of the negative electrode core body 22. The negative electrode active material layer 24 here is formed on both surfaces of the negative electrode core body 22 from the winding-start end 20s to the winding-termination end 20e of the negative electrode 20 illustrated in FIG. 6. The negative electrode active material layer 24 contains a negative electrode active material that is capable of reversibly storing and releasing charge carriers. The negative electrode active material layer 24 preferably contains the negative electrode active material and a binder. A width W2 of the negative electrode active material layer 24 (see FIG. 7) is preferably equal to or longer than the width W1 of the positive electrode active material layer 14 from the viewpoint of acceptability of charge carriers. In consideration of the relationship with the width W1 of the positive electrode active material layer 14, the width W2 of the negative electrode active material layer 24 is preferably 200 mm or more, and more preferably 250 mm or more. The negative electrode active material layer 24 here covers the positive electrode active material layer 14 at both ends thereof in the width direction TD.

The negative electrode active material is a particulate material that can reversibly store and release charge carriers in consideration of the relationship with the positive electrode active material described above. The negative electrode active material preferably contains graphite. However, the negative electrode active material may contain materials other than graphite. Examples of negative electrode active materials other than graphite include carbon materials such as hard carbon, soft carbon, and amorphous carbon, and silicon-based materials.

As a negative electrode binder, resin binders conventionally used as a negative electrode binder can be used. Examples of the negative electrode binder include rubbers such as styrene-butadiene rubber (SBR), celluloses such as carboxymethyl cellulose (CMC), and acrylic resins such as polyacrylic acid (PAA). The negative electrode binder may be made of SBR and CMC. The negative electrode active material layer 24 may contain an arbitrary component such as a conductive material in addition to the negative electrode active material and the negative electrode binder. As the conductive material, carbon materials exemplified as the arbitrary component that may be contained in the positive electrode active material layer 14 can be used.

A functional layer may be provided on the surface of the positive electrode 10 and/or negative electrode 20. The functional layer is a layer that imparts a desired function (e.g., improved heat resistance, adhesiveness, strength, etc.) to the positive electrode 10 and/or negative electrode 20. Suitable examples of the functional layer include a heat resistant layer and an adhesive layer. For example, a heat resistant layer containing an inorganic filler and a binder is provided on the surface of the positive electrode 10 and/or negative electrode 20, whereby the occurrence of internal short circuit can be suppressed when metallic foreign matter is introduced, thereby improving the safety of the secondary battery 100. Also, according to the manufacturing method disclosed herein, the wound electrode body 40 can be efficiently manufactured while suppressing peeling of the functional layer.

Each of the first separator 32 and the second separator 34 is a band-shaped member, as illustrated in FIG. 7. The separators 32 and 34 are arranged between the positive electrode 10 and the negative electrode 20. The separators 32 and 34 are insulating sheets having a plurality of fine through-holes through which charge carriers can pass. Through interposition of the separators 32 and 34 between the positive electrode 10 and the negative electrode 20, it becomes possible to prevent contact between the positive electrode 10 and the negative electrode 20, and to move charge carriers (for example, lithium ions) between the positive electrode 10 and the negative electrode 20. A width W3 of each of the separators 32 and 34 (see FIG. 7) is preferably equal to or longer than the width W2 of the negative electrode active material layer 24. The separators 32 and 34 here cover the negative electrode active material layer 24 at both ends thereof in the width direction TD. The width W1 of the positive electrode active material layer 14, the width W2 of the negative electrode active material layer 24, and the width W3 of each of the separators 32 and 34 satisfy a relationship of W1 < W2 < W3.

The separators 32 and 34 may have the same configuration or different configurations. At least one of the separators 32 and 34 preferably includes a separator base material and one or more functional layers. The functional layer is formed on at least one surface of the separator base material, in other words, on the surface of the separator base material on the side facing the positive electrode 10 and/or the surface of the separator base material on the side facing the negative electrode 20. The functional layer may be provided on only one surface of the separator base material or on both respective surfaces thereof.

The separator base material can be any conventionally known material used for battery separators without particular restrictions. The separator base material is preferably a porous sheet-like material. The separator base material may have a single-layer structure, or it may have the structure of two or more layers, e.g., three layers. The separator base material is preferably made of polyolefin resin. This ensures sufficient flexibility of the separators 32 and 34 and facilitates the production of the wound electrode body 40. As the polyolefin resin, polyethylene (PE), polypropylene (PP), or a mixture thereof is preferable, and PE is further preferable.

The functional layer is a layer that imparts a desired function (e.g., improved heat resistance, adhesiveness, strength, etc.) to the separator base material. Suitable examples of the functional layer include a heat resistant layer and an adhesive layer. Although the functional layer can be a brittle layer with a more uneven surface than the separator base material, the manufacturing method disclosed herein can efficiently manufacture the wound electrode body 40 while suppressing peeling of the functional layer. In a preferred embodiment, the separators 32 and 34 each include a heat resistant layer formed on one surface of the separator base material and an adhesive layer formed on the other surface of the separator base material. However, in other embodiments, for example, the heat resistant layer and the adhesive layer may be stacked on one surface of the separator base material in this order, the heat resistant layer may not be provided, or the adhesive layer may not be provided.

The heat resistant layer contains an inorganic filler and a binder. The provision of the heat resistant layer can contribute to improving the safety of the secondary battery 100 by suppressing thermal shrinkage of the separators 32 and 34. Ceramic particles such as alumina, zirconia, boehmite, aluminum hydroxide, silica, and titania are preferable as the inorganic filler. From the viewpoint of suppressing thermal shrinkage of the separators 32 and 34, a compound containing especially aluminum is preferable. The inorganic filler may account for the highest mass percentage in the heat resistant layer. Examples of heat resistant layer binders include acrylic resins, fluorine resins, urethane resins, an ethylene vinyl acetate resin, and epoxy resins. Of them, acrylic resins are preferable. The surface roughness Ra of the heat resistant layer can typically be larger than the surface roughness Ra of the separator base material, and it is, for example, about 0.2 to 1.0 µm.

The heat resistant layer preferably faces the positive electrode 10. The heat resistant layer is preferably in contact with the positive electrode 10 (typically, the positive electrode active material layer 14). This suitably suppresses thermal shrinking of the separators 32 and 34 at high temperatures, and allows gas generated inside the wound electrode body 40 to be smoothly discharged to the outside of the wound electrode body 40, for example, during initial charging or overcharging of the secondary battery 100.

The adhesive layer contains, for example, an adhesive layer binder in the highest mass percentage. The adhesive layer may further contain other materials (e.g., inorganic fillers, or the like). Examples of adhesive layer binders include fluorine resins, acrylic resins, urethane resins, an ethylene vinyl acetate resin, and epoxy resins. Of them, fluorine resins and acrylic resins are particularly preferable because of their high flexibility. The adhesive layer binder may be the same as or different from the heat resistant layer binder. The adhesive layer preferably faces the negative electrode 20. The adhesive layer is preferably in contact with the negative electrode 20 (typically, the negative electrode active material layer 24). In such a case, the adhesive layer adheres to the negative electrode 20, for example, by a press forming step in the manufacturing method described below. This can suppress stacking displacement. In addition, an increase in the thickness of the flat portion 40f of the wound electrode body 40 after the press forming can be suppressed, thereby suppressing the occurrence of springback.

### <2. Manufacturing method for secondary battery>

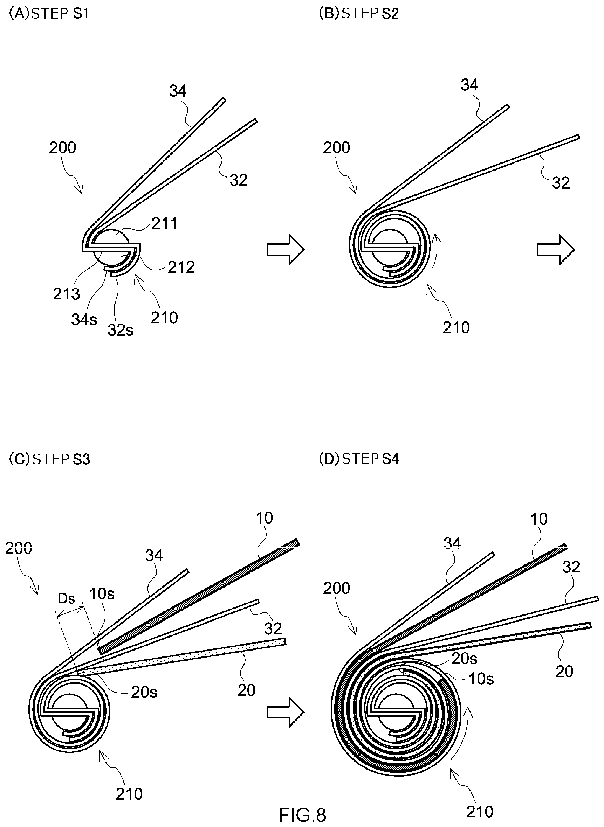

The aforementioned secondary battery 100 can be manufactured in accordance with a manufacturing method that includes, for example, an electrode body producing step of producing the wound electrode body 40 with a flat shape by using the positive electrode 10 and the negative electrode 20 along with the separators 32 and 34. Otherwise, the manufacturing process may be similar to conventional processes. In addition, the manufacturing method disclosed herein may further include other steps, at any stage. For example, after the electrode body producing step, the method may include a step of accommodating the wound electrode body 40 and the electrolyte solution in the battery case 50, a step of sealing the battery case 50, or other steps. In the present embodiment, the electrode body producing step includes (1) a winding step and (2) a press forming step in this order. After the winding or press forming steps, (3) a drying step may be further included. The following is a detailed description with reference to FIGS. 8A to 8E.
(1) The winding step is a step of producing a cylindrical wound body (cylinderical body) that includes the positive electrode 10 with a band shape, the negative electrode 20 with a band shape, and the separators 32 and 34 with a band shape. In this step, a winding device is used. The positive electrode 10 with a band shape, the negative electrode 20 with a band shape, the first separator 32 with a band shape, and the second separator 34 with a band shape are reeled and set on the winding device. The winding device includes a winding unit 200, for example, such as that illustrated in FIG. 8 (A). The positive electrode 10 with a band shape, the negative electrode 20 with a band shape, the first separator 32 with a band shape, and the second separator 34 with a band shape are transported to the winding unit 200 along a transport path (e.g., through multiple rollers), not illustrated. The transport path is equipped as appropriate with a dancer roll mechanism for removing loosening of the winding, a tensioner for adjusting the tension of the winding, and the like. The winding unit 200 has the winding core 210 and a rotating mechanism (not illustrated) to rotate the winding core 210 as illustrated in FIG. 8 (A).

The winding core 210 here has a substantially cylindrical external shape, and side surfaces thereof have a substantially circular shape as illustrated in FIG. 8 (A). However, in other embodiments, the side surface of the winding core 210 may be flat-shaped. In that case, the press forming step (2) described below may be omitted. Although not particularly limited, the diameter of the winding core 210 is about 50 to 100 mm, for example, 80 mm as one example. The winding core 210 has a first portion 211 and a second portion 212, which are each divided into a semicircular shape. A slit 213 is formed between the first portion 211 and the second portion 212 so as to cause the shaft center of the winding core 210 to pass therethrough. The length of the slit 213 is the same as the diameter of the winding core 210. The width of the slit 213 is formed so that the separators 32 and 34 can be inserted therethrough. The winding core 210 is configured here to adsorb and fix the separators 32 and 34 in the slit 213 by using an electrostatic chuck. The electrostatic chuck is configured to be switchable between ON and OFF by a control device not illustrated.

The winding core 210 further has an adsorption mechanism that adsorbs, onto the winding core 210, a member (e.g., separator 32 and 34) supported by the winding core 210. Although the illustration is omitted, in the present embodiment, suction holes are formed on the side surfaces of the winding core 210 (specifically, on arc parts of the first portion 211 and the second portion 212). The adsorption mechanism is equipped with a suction fan, for example, and is configured to adsorb and retain a member supported by the winding core 210 onto the winding core 210 by drawing air above the winding core 210 through the suction holes. The adsorption mechanism is configured to be switchable between ON and OFF by a control device not illustrated.

The rotating mechanism is connected to the control device not illustrated and is configured to rotate the winding core 210 around its shaft center at a predetermined rotational speed in a predetermined rotational direction (here, counterclockwise, in the direction indicated by the arrow in FIG. 8 (B)). The rotational mechanism is, for example, a rotation motor, and the rotation mechanism is configured to be capable of controlling the switching between ON and OFF and the rotational speed by using the control device not illustrated.

In the present embodiment, the winding step includes a retaining step (step S1), a first winding step (step S2), an arrangement step (step S3), and a second winding step (step S4) in this order. FIG. 8 (A) is an explanatory diagram of the retaining step, FIG. 8 (B) is an explanatory diagram of the first winding step, FIG. 8 (C) is an explanatory diagram of the arrangement step, and FIG. 8 (D) is an explanatory diagram of the second winding step.

In the retaining step (step S1), as illustrated in FIG. 8 (A), the first separator 32 and the second separator 34 are retained on the winding core 210. In the present embodiment, first, the winding-start end 32s of the first separator 32 and the winding-start end 34s of the second separator 34 are aligned with each other, and the starting end part of the first separator 32 and the starting end part of the second separator 34 are passed through the slit 213 of the winding core 210. That is, the separators 32 and 34 are sandwiched between a first portion 211 and a second portion 212 of the winding core 210. It is noted that here, the first separator 32 is arranged on the inner side (on the winding core 210 side), while the second separator is arranged on the outer side (on top of the first separator 32). At this time, the starting end part of the first separator 32 and the starting end part of the second separator 34 pass through the slit 213 and protrude from the slit 213 by a predetermined length. The separators 32 and 34 in the slit 213 are adsorbed and fixed to the winding core 210 by the electrostatic chuck.

A portion of the separators protruding from the slit 213 is then bent in the direction opposite to the rotational direction of the winding core 210 (here, clockwise) and curved along the second portion 212 of the winding core 210. This creates a first bending point P1 and a second bending point P2 at the starting end parts of the separators 32 and 34, whereby the separators 32 and 34 are bent into the Z-shape. In the present embodiment, as illustrated in FIG. 8 (A), the starting end part of the first separator 32 and the starting end part of the second separator 34 cover about half the arc of the second portion 212. The separators 32 and 34 wound onto the winding core 210 are adsorbed and fixed onto the winding core 210 by the adsorption mechanism. In this way, the separators 32 and 34 are retained by the winding core 210.

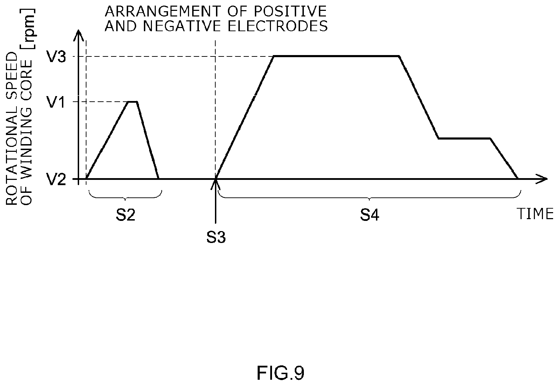

In the first winding step (step S2), as illustrated in FIG. 8 (B) and FIG. 9, the winding core 210 is rotated at a first rotational speed V1 in the predetermined rotational direction (here, counterclockwise, in the direction indicated by the arrow in FIG. 8 (B)) while feeding the first separator 32 with a band shape and the second separator 34 with a band shape. Thus, the first separator 32 and the second separator 34 are wound onto the winding core 210 by a predetermined length. This step can be equivalent to the conventional "separator initial winding step". Although not particularly limited, the first rotational speed V1 (the fastest rotational speed during this step (in the graph of FIG. 9)) is preferably, for example, 150 to 1500 rpm.

In the arrangement step (step S3), as illustrated in FIG. 8 (C), the winding core 210 is first brought into the state of stopping (i.e., the state of V2 = 0) or rotating at a second rotational speed V2 slower than the first rotational speed V1 by using the control device. By slowing down the rotational speed of the winding core 210 compared to that in the first winding step, the stacking displacement (misalignment) of the positive electrode 10 and the negative electrode 20 can be suppressed, thereby producing the wound electrode body 40 with high reliability. Also, when inserting the positive electrode 10 and/or negative electrode 20, for example, the surfaces of the separators 32 and 34 and the surfaces of the positive electrode 10 and/or negative electrode 20 rub strongly against each other, which can prevent, for example, a part of the functional layer from falling off. In a preferred embodiment, it is more preferable to bring the winding core 210 into the state of stopping (V2 = 0). Although not particularly limited, when the winding core 210 is brought into the state of rotating, the second rotational speed V2 (the fastest rotational speed in this step) is preferably a low speed, for example, 20 rpm or less. The second rotational speed V2 can be, for example, 1 to 10 rpm, or even 1 to 5 rpm.

Then, the positive electrode 10 with a band shape and the negative electrode 20 with a band shape are inserted substantially at the same time at the timing when the rotational speed of the winding core 210 is reduced (or preferably the winding core 210 is stopped). In other words, the positive electrode 10 and the negative electrode 20 are started to be wound once the rotational speed of the winding core 210 is reduced, or once the rotation of the winding core 210 is stopped. Specifically, the winding-start end 20s of the negative electrode 20 is arranged such that the negative electrode 20 is located on the inner circumferential surface side (the surface on the winding core 210 side) of the first separator 32. Further, the winding-start end 10s of the positive electrode 10 is arranged between the outer circumferential surface of the first separator 32 (the surface opposite to the winding core 210) and the second separator 34. Thus, the negative electrode 20 is located on the inner circumference side relative to the positive electrode 10 by employing a winding method in which the negative electrode 20 is located on the inner circumferential side of the first separator 32 with the positive electrode 10 sandwiched between the outer circumferential side surface of the first separator 32 and the inner circumferential side surface of the second separator 34, thereby wrapping the negative electrode 20 in the positive electrode 10. This can wind the positive electrode 10 and the negative electrode 20 onto the winding core 210 substantially at the same time.

At this time, as illustrated in FIG. 8 (C), the spacing Ds in the winding direction between the winding-start end 10s of the positive electrode 10 and the winding-start end 20s of the negative electrode 20 can be adjusted by shifting an insertion position of the winding-start end 10s of the positive electrode 10 from an insertion position of the winding-start end 20s of the negative electrode 20.

In this specification, the term "substantially at the same time" is a term that allows for slight discrepancies due to, for example, human or mechanical errors. Specifically, it is the term that encompasses a case where the positive electrode 10 and the negative electrode 20 are arranged simultaneously (within 0.05 sec) and a case where the positive electrode 10 and the negative electrode 20 are arranged with a time lag of about 0.05 to 0.3 sec.

In the second winding step (step S4), as illustrated in FIG. 8 (D) and FIG. 9, the winding core 210 is rotated at a third rotational speed V3 faster than the first rotational speed V1 while feeding the positive electrode 10 with a band shape and the negative electrode 20 with a band shape. Thus, the positive electrode 10 and the negative electrode 20 can be wound onto the winding core 210. This step can be equivalent to the conventional "main winding step". Although not particularly limited, the third rotational speed V3 (the fastest rotational speed during this step (in the graph of FIG. 9)) is preferably faster than the first rotational speed V1 and the second rotational speed V2. The third rotational speed V3 is preferably, for example, 500 to 1500 rpm.

After the positive electrode 10 and the negative electrode 20 are wound onto the winding core 210 a predetermined number of times in this way, the winding-termination end 10e of the positive electrode 10, the winding-termination end 20e of the negative electrode 20, and the winding-termination ends 32e and 34e of the separators 32 and 34 are cut off by using a cutter or the like. At this time, preferably, the winding-termination end 20e of the negative electrode 20 is adjusted to be located closer to the end of the winding than the winding-termination end 10e of the positive electrode 10, and the winding-termination ends 32e and 34e of the separators 32 and 34 are also adjusted to be located closer to the end of the winding than the winding-termination end 20e of the negative electrode 20. The winding-termination end 32e of the first separator 32 and the winding-termination end 34e of the second separator 34 are preferably aligned with each other. Then, the winding stopper tape 48 (see FIG. 6) is attached to the winding-termination end 32e of the first separator 32 and the winding-termination end 34e of the second separator 34. In this way, the cylindrical body is produced.

As described above, in the manufacturing method disclosed herein, (1) in the winding step, the number of times that the rotation of the winding core 210 is slowed or stopped can be decreased from two times to one time, compared to the related art. In other words, a step of accelerating or decelerating the rotational speed of the winding core 210 is not included between the timing at which the positive electrode 10 is arranged and the timing at which the negative electrode 20 is arranged. Thus, for example, the conventional negative electrode initial winding step can be omitted. As a result, the tact time of the winding step can be shortened, thereby efficiently producing the wound electrode body 40 with high reliability where stacking displacement or the like is suppressed. This can in turn improve the productivity of the secondary battery 100.

(2) In the press forming step, the cylindrical body produced in the way described above is press-formed into a flat shape such as that illustrated in FIG. 6 or the like. The conditions of the press forming (e.g., pressure, retaining time, etc.) are design matters that can be adjusted as appropriate depending on, for example, the number of times that the winding is performed to manufacture the wound electrode body 40 and the properties of the separator (presence or absence and composition of the functional layer). The press forming may be performed at room temperature, or may be performed under heating (at a high temperature). As a result of the press forming, the positive electrode tab group 42 in which the positive electrode tabs 12t are stacked is formed at one end part of the wound electrode body 40 in the width direction Y, while the negative electrode tab group 44 in which the negative electrode tabs 22t are stacked is formed at the other end part. A reaction portion in which the positive electrode active material layer 14 and the negative electrode active material layer 24 oppose each other is formed in the length of the width W1 in the central portion of the wound electrode body 40 in the width direction Y In the way described above, the wound electrode body 40 including the positive electrode 10, negative electrode 20, and separators 32 and 34 is produced.

In the present embodiment, each of the separators 32 and 34 has an adhesive layer on its surface facing the negative electrode 20. Thus, the adhesive layers of the separators 32 and 34 adhere to the negative electrode 20 through the press forming. Specifically, when the cylindrical body is squashed by the press forming, a large pressure is applied to each of the positive electrode 10, the negative electrode 20, and the separators 32 and 34 located in the flat portion 40f. Thus, the adhesive layer is deformed by being pressed, while conforming to the surface of the negative electrode active material layer 24, so that the separators 32 and 34 and the negative electrode 20 adhere (or are pressure-bonded) to each other.

(3) In the drying step, moisture contained in the wound electrode body 40 is removed. As the drying method, conventionally known methods can be employed as appropriate, and examples thereof include circulation drying, heat drying, vacuum drying, and the like. When heat drying is employed, the heating temperature is preferably 120°C or lower from the viewpoint of suppressing thermal shrinkage of the separators 32 and 34 (especially the thermal shrinkage of the separator base material).

### <3. Application of secondary battery>

The secondary battery 100 can be used for various applications, and can be suitably used, for example, as a power source (drive power source) for motors mounted on vehicles such as passenger cars and trucks. The vehicle is not limited to a particular type, and may be, for example, a plug-in hybrid electric vehicle (PHEV), a hybrid electric vehicle (HEV), or a battery electric vehicle (BEV).

Several embodiments of the present disclosure have been described above, but these embodiments are merely illustrative in character. The present disclosure can be implemented in various other embodiments. The present disclosure can be implemented on the basis of the disclosure of the present specification and common technical knowledge in the relevant field. The art set forth in the scope of claims encompasses various modifications and alterations of the embodiments illustrated above. For example, a part of the aforementioned embodiment can be replaced by another modified aspect, and the other modified aspect can be added to the aforementioned embodiment. Moreover, a given feature may be expunged as appropriate if the feature is not explained as essential.

As described above, the specific aspects of the art disclosed herein are those described in the following respective items.
Item 1. A method of manufacturing a secondary battery including a wound electrode body in which a first separator with a band shape, a positive electrode with a band shape, a second separator with a band shape, and a negative electrode with a band shape are stacked and wound, the method including: a retaining step of retaining the first separator and the second separator on a winding core; a first winding step of, after the retaining step, winding the first separator and the second separator onto the winding core by rotating the winding core at a first rotational speed; an arrangement step of, after the first winding step, arranging a winding-start end of the negative electrode such that the negative electrode is located on an inner circumferential side of the first separator and also arranging a winding-start end of the positive electrode between an outer circumferential side surface of the first separator and the second separator, in a state where the winding core is rotated at a second rotational speed slower than the first rotational speed or is stopped; and a second winding step of, after the arrangement step, winding the positive electrode and the negative electrode onto the winding core at a third rotational speed faster than the first rotational speed.
Item 2. The manufacturing method according to Item 1, wherein at least one of the first separator and the second separator includes a separator base material and a functional layer provided on at least one surface of the separator base material.
Item 3. The manufacturing method according to Item 1 or 2, wherein the first separator and the second separator are formed in a Z-shape in a winding-start end region of the wound electrode body as viewed from a direction of a winding axis of the wound electrode body.
Item 4. The manufacturing method according to any one of Items 1 to 3, wherein a winding-start end of the first separator and a winding-start end of the second separator are aligned with each other.
Item 5. The manufacturing method according to any one of Items 1 to 4, wherein a winding-termination end of the first separator and a winding-termination end of the second separator are aligned with each other.
Item 6. The manufacturing method according to any one of Items 1 to 5, wherein a spacing between the winding-start end of the positive electrode and the winding-start end of the negative electrode is 20 mm or less in a winding direction.

### [Reference Signs List]

- 10: Positive electrode
- 20: Negative electrode
- 32, 34: Separator
- 40: Wound electrode body
- 50: Battery case
- 100: Secondary battery
- 200: Winding unit
- 210: Winding core
- 211: First part
- 212: Second part
- 213: Slit
- P1: First bending point
- P2: Second bending point
- P3: Third bending point
- P4: Fourth bending point

## Claims

1. A method of manufacturing a secondary battery (100) including a wound electrode body (40) in which a first separator (32) with a band shape, a positive electrode (10) with a band shape, a second separator (34) with a band shape, and a negative electrode (20) with a band shape are stacked and wound, the method comprising:
a retaining step (S1) of retaining the first separator (32) and the second separator (34) on a winding core (210);
a first winding step (S2) of, after the retaining step, winding the first separator (32) and the second separator (34) onto the winding core (210) by rotating the winding core (210) at a first rotational speed (V1);
an arrangement step (S3) of, after the first winding step (S2), arranging a winding-start end (20s) of the negative electrode (20) such that the negative electrode (20) is located on an inner circumferential side of the first separator (32) and also arranging a winding-start end (10s) of the positive electrode (10) between an outer circumferential side surface of the first separator (32) and the second separator (34), in a state where the winding core (210) is rotated at a second rotational speed (V2) slower than the first rotational speed (V1) or is stopped; and
a second winding step (S4) of, after the arrangement step (53), winding the positive electrode (10) and the negative electrode (20) onto the winding core (210) at a third rotational speed (V3) faster than the first rotational speed (V1).

2. The manufacturing method according to claim 1, wherein at least one of the first separator (32) and the second separator (34) includes a separator base material and a functional layer provided on at least one surface of the separator base material.

3. The manufacturing method according to claim 1 or 2, wherein the first separator (32) and the second separator (34) are formed in a Z-shape in a winding-start end region of the wound electrode body (40) as viewed from a direction of a winding axis (WL) of the wound electrode body (40).

4. The manufacturing method according to any one of claims 1 to 3, wherein a winding-start end (32s) of the first separator (32) and a winding-start end (34s) of the second separator (34) are aligned with each other.

5. The manufacturing method according to any one of claims 1 to 4, wherein a winding-termination end (32e) of the first separator (32) and a winding-termination end (34e) of the second separator (34) are aligned with each other.

6. The manufacturing method according to any one of claims 1 to 5, wherein a spacing between the winding-start end (10s) of the positive electrode (10) and the winding-start end (20s) of the negative electrode (20) is 20 mm or less in a winding direction (MD).
